# EUROPÄISCHE PATENTSCHRIFT

(11) **EP 3 498 088 B1**
(45) Veröffentlichungstag und Bekanntmachung des Hinweises auf die Patenterteilung: **12.02.2020**
(21) Anmeldenummer: 18161207.8
(22) Anmeldetag: 12.03.2018
(51) Int. Cl.: A01G 24/23, A01G 24/44

(54) **HOLZFASERMATTE ZUR VERWENDUNG ALS PFLANZENSUBSTRAT**
WOODFIBRE MAT FOR USE AS PLANT SUBSTRATE
TAPIS DE FIBRES DE BOIS DESTINÉ À ÊTRE UTILISÉ COMME SUBSTRAT VÉGÉTAL

(30) Priorität: 18.12.2017 EP 17208071
(43) Veröffentlichungstag der Anmeldung: 19.06.2019
(73) Patentinhaber: SWISS KRONO Tec AG, 6004 Luzern (CH)
(72) Erfinder: KALWA, Norbert, 32805 Horn-Bad Meinberg (DE); SIEMS, Jens, 17139 Malchin (DE)
(74) Vertreter: Maikowski & Ninnemann Patentanwälte Partnerschaft mbB

(56) Entgegenhaltungen:
- EP-A1- 3 143 870
- WO-A1-2009/011905
- WO-A2-2004/008839

## Beschreibung

Die vorliegende Erfindung betrifft eine Holzfasermatte zur Verwendung als Pflanzensubstrat, deren Verwendung und Verfahren zu deren Herstellung.

### Beschreibung

In der Landwirtschaft und im Gartenbau werden insbesondere in Gewächshäusern mehr und mehr Produkte eingesetzt, die die Aufzucht von Pflanzen verbessern, erleichtern und verbilligen sollen. Ein wichtiger Aspekt ist in diesem Zusammenhang eine exakte Einstellung des Nährstoffgehaltes für die Pflanzen.

Ein Ansatz bildet in diesem Zusammenhang die Verwendung von geeigneten Substratkomponenten, die über gute Dränageeigenschaften in Verbindung mit einem geringen Nährstoffgehalt, hoher Strukturstabilität und guter Luftführung verfügen. Die gewünschten Werte für den Nährstoffgehalt und pH-Wert können durch Kalkung und Düngung exakt eingestellt werden.

Als traditionell bevorzugte Substratkomponente wird häufig Torf eingesetzt. Torf lässt sich gut und schnell verteilen und ist ein ideales Substratausgangsmaterial mit einstellbarer Wasserkapazität. Torf, insbesondere der Weißtorf, weist eine gute Luftführung auch bei Wassersättigung auf, während Schwarztorf über eine höhere Kationenaustauschkapazität und bessere pH-Pufferung verfügt. Torf wird traditionell aus Hochmooren und Niedermooren gewonnen, was in zunehmenden Maße ökologisch nicht vertretbar ist. Aufgrund des hohen Bedarfes an Torf werden diese zunehmend importiert, was zu hohen Kosten führt und ebenfalls im Abbauland ökologische Schäden hinterlässt.

Neben Torf ist eine Vielzahl von weiteren möglichen Substratkomponenten bekannt. So wird zunehmend der Einsatz von Xylit (Vorstufe der Braunkohle), mineralischen Substraten wie Vermiculit, poröses Vulkangestein, Ölschiefer oder auch Steinwolle diskutiert.

Im Falle der Steinwolle wurden die an sich hydrophoben Glasfasern mit Hilfe von Tensiden und anderen Hilfsstoffen hydrophobiert (DE 4024727 A1). Die Mineralwolle kann auch mit Wasser absorbierenden Mitteln wie pyrogener Kieselsäure, Tonmineralien, Aluminiumoxid oder einem organischen Superabsorber wie z.B. einem Acrylamid/Acrylsäure-Copolymerisat zur Verbesserung des Wasserrückhaltevermögens versehen werden (DE 4035249 A1).

Insbesondere bei der Verwendung von Steinwolle bzw. Mineralwolle als Pflanzensubstrat, ergeben sich eine Reihe von Nachteilen. So ist die Herstellung von Steinwolle energieintensiv, und eine ökologische Entsorgung ist nicht oder nur schwer möglich, z.B. ist die Beimengung von verkleinerter Steinwolle zu erdigen Substraten ökologisch umstritten. Zwar besteht die Möglichkeit der Wiederverwertung von Steinwolle durch Beimengung beispielsweise bei der Ziegelherstellung, insgesamt bleibt jedoch festzustellen, dass die Wiederverwertung von Steinwolle unzureichend gelöst ist. Zudem sind Pflanzenmatten aus Steinwolle mit chemischen Substanzen beaufschlagt um die gewünschten Eigenschaften des Endproduktes generieren zu können. Auch sind weite Transportwege nach der Lebenszyklusphase der Matten zu den jeweiligen Entsorgungs- oder Recycling-Verarbeitungsunternehmen erforderlich, was weiter zu der negativen ökologischen Bilanz beiträgt.

Somit besteht bei vielen dieser Substrate das Problem der Entsorgung, die sich sowohl vom Aufwand als auch von den Kosten negativ auf die Produkte auswirkt. Als Beispiel seien hier nur Substrate auf Basis von Glas- oder Steinwolle genannt. Diese werden heute insbesondere in den Niederlanden eingesetzt. Die Jahresbedarfe für derartige Substrate liegen dort bei mehr als 300 000 m³ pro Jahr bei einer Stärke von 80 mm, was einer Fläche von mehr als 3,5 Mill m² entspricht.

Entsprechend besteht nach wie vor ein sehr großer Bedarf an erdlosen Substraten. Hier hat sich als eine weitere Alternative für Substratkomponenten seit den 1990er Jahren die Verwendung von Holzfasern etabliert. Zunächst wurden Holzfasern als Torfersatzstoff in Blumenerden verwendet, besitzen mittlerweile jedoch eine wichtige Bedeutung als organische Substratkomponente im Gartenbau. Holzfasern kommen häufig in Mischungen mit reduzierten oder ohne Torfanteil zum Einsatz. Von allen Torfersatzstoffen ist die Holzfaser in ihren Eigenschaften dem Torf mit Ausnahme der Wasserkapazität am ähnlichsten. Holzfasern weisen dank ihrer Porenstrukturen eine deutlich höhere Luftkapazität als Torf auf und sind grundsätzlich Unkrautfrei. Die lockere Struktur der Holzfasern bedingt gute Dränageeigenschaften und macht die Substrate vergießfest bzw. strukturstabil. Ein wesentlicher Nachteil der Holzfasern besteht allerdings darin, dass die hohe Luftkapazität zulasten einer vergleichsweise geringen Wasserkapazität geht. EP3143870A1 offenbart eine Holzfasermatte zur Verwendung als Pflanzensubstrat umfassend Holzfasern, ein biologischabbaubares Bindemittel, und mindestens ein Mittel zur Absorption einer polaren Flüssigkeit. Es offenbart ebenfalls ein Verfahren zu deren Herstellung.

Mögliche Alternativen auf Basis von Holzfasermatten haben aber den Nachteil, dass sie häufig wegen der Holzfasern beim Bewässern in dem Wasser zu einem niedrigen pH-Wert führen, der die optimale Aufnahme von Mineralstoffen durch die Pflanze behindert. Für die meisten Gemüsepflanzen sollte der pH-Wert des Bodens/ des Substrates um bzw. oberhalb von 4,5 liegen. Dies gilt besonders für Tomaten oder Gurken, die zum überwiegenden Anteil in Gewächshäusern auf Substraten kultiviert werden. Zusätzlich setzen die Holzfasermatten Holzinhaltsstoffe frei (Essigsäure, Ameisensäure), die zum einen mit für den niedrigen pH-Wert verantwortlich sind und zum anderen durch die Emission dieser Holzinhaltsstoffe zu einer Geruchsbelästigung führen können. Dies gilt insbesondere deshalb, da die Raumbeladung von Gewächshäusern mit solchen Substraten relativ hoch ist und zusätzlich durch die hohen Temperaturen in den Gewächshäusern eine verstärkte Emission stattfindet.

Der vorliegenden Erfindung liegt daher die technische Aufgabe zu Grunde, die an sich als erdloses Substrat bekannten Holzfasern so auszustatten, so dass die oben beschriebenen Mängel nicht auftreten. Dabei sollen keine Vorprodukte eingesetzt werden, die im Hinblick auf die Entsorgung problematisch sind. Weiterhin sollte sich das Produkt im Hinblick auf sein gesamtes ökologisches Profil (Herstellung aus nachwachsenden Rohstoffen, geringer Energiebedarf bei der Herstellung, einfache Entsorgung wegen biologischer Abbaubarkeit usw.) positiv einzustufen sein. Zusätzlich soll das Produkt in der Nutzung bezüglich der Eigenschaften mit den aktuell im Markt befindlichen Produkten vergleichbar sein.

Diese Aufgabe wird erfindungsgemäß durch eine Holzfasermatte mit den Merkmalen des Anspruchs 1 und deren Herstellung in einem Verfahren gemäß Anspruch 10 gelöst.

Demnach wird eine Holzfasermatte zur Verwendung als Pflanzensubstrat umfassend Holzfasern, und mindestens ein Mittel zur Absorption einer polaren Flüssigkeit bereitgestellt, wobei die Holzfasermatte des Weiteren ein biologisch abbaubares Bindemittel aus Polymilchsäurefasern und mindestens einer Stärke aufweist.

Es wird somit eine Holzfasermatte zur Verfügung gestellt, die als Bindemittel eine Kombination aus zwei Bindemitteln umfasst, und zwar eine Kombination aus Polymilchsäurefasern als synthetischem Bindemittel und Stärke als natürlichem Bindemittel.

Die Verwendung der spezifischen Kombination aus Polymilchsäurefasern und Stärke als Bindemittel führt überraschenderweise zu einer Erhöhung des pH-Wertes in der Holzfasermatte im Vergleich zu einer Holzfasermatte, die mit PET-Fasern hergestellt wurde. Dies ist trotz geringer Zugaben des Stärkebindemittels bezogen auf Holzfasern feststellbar. Auch ist eine Geruchsverminderung bezüglich des Essiganteils feststellbar. Damit scheint das Stärkebindemittel die Emission von Essigsäure zu mindern, da wahrscheinlich die Abbaureaktionen durch den erhöhten pH-Wert vermindert sind.

Die erfindungsgemäße Holzfasermatte weist somit verschiedene Vorteile auf. So ist eine gezielte pH-Einstellung der Pflanzmatte ist möglich. Die Essigsäureemission wird verringert. Die erfindungsgemäße Holzfasermatte kann in einfacher Weise entsorgt werden, z.B. mittels Kompostierung der Substratmatten nach der Lebenszyklusphase. Die Substratmatten sind vollständig recyclingfähig. Durch ein höheres Absorptionsverhalten der Substratmatten ist es gewährleistet, dass während der Vegetationsphase der Pflanzen die Substratfeuchte genau und gleichmäßig eingestellt werden kann. Dieser Umstand bewirkt ein schnelleres und gleichbleibendes Wachstumsverhalten der Pflanzen. Die somit zielgenauere Dosierung bewirkt eine feinere Verteilung der zugesetzten Nährstoffe im Faserverbund. Nährstoffe können zielgenauer dem Wurzelwerk zugeführt werden. Des Weiteren weist die erfindungsgemäße Holzfasermatte eine deutliche verringerte Neigung gegenüber Schimmelbewuchs auf.

In einer Ausführungsform der vorliegenden Holzfasermatte ist die als Bindemittel verwendete Stärke ausgewählt aus der Gruppe enthaltend Kartoffelstärke, Maisstärke, Weizenstärke, Reisstärke.

Stärke ist ein Polysaccharid mit der Formel (C₆H₁₀O₅)ₙ, das aus α-D-Glucose-Einheiten besteht. Das Makromolekül zählt daher zu den Kohlenhydraten. Stärke kann unter Hitzeeinwirkung ein Vielfaches ihres Eigengewichtes an Wasser physikalisch binden, aufquellen und verkleistern. Beim Erhitzen mit Wasser quillt die Stärke bei 47-57 °C, die Schichten platzen, und bei 55-87 °C (Kartoffelstärke bei 62,5 °C, Weizenstärke bei 67,5 °C) entsteht Stärkekleister, welcher je nach der Stärkesorte verschiedenes Steifungsvermögen besitzt (Maisstärkekleister größeres als Weizenstärkekleister, dieser größeres als Kartoffelstärkekleister) und sich mehr oder weniger leicht unter Säuerung zersetzt.

Stärke ist sowohl in der nativen Form als auch in modifizierter (derivatisierter) Form als Bindemittel einsetzbar. So kann die mindestens eine Stärke in nativer oder modifizierter (derivatisierter) Form in der Holzfasermatte vorliegen. Bevorzugt wird als stärkehaltiges Bindemittel DuraBinders der Firma Ecosynthetix verwendet.

Im Falle der Verwendung von modifizierter bzw. derivatisierter Stärke als Bindemittel kann diese ausgewählt sein aus einer Gruppe enthaltend kationische oder anionische Stärke, carboxylierte Stärke, carboxy-methylierte Stärke, sulfatierte Stärke, phosphorylierte Stärke, veretherte Stärke wie hydroxyalkylierte Stärke (z.B. hydroxyethylierte Stärke, hydroxypropylierte Stärke), oxidierte Stärke enthaltend Carboxyl- oder Dialdehydgruppen und hydrophobe Stärken wie Acetatester, Succinatester, Halbester oder Phosphatester.

Es ist auch generell vorstellbar eine Mischung einer natürlichen Stärke und einer derivatisierten Stärke oder von mehreren natürlichen Stärken und/oder mehreren derivatisierten Stärken zu verwenden.

Je größer die Menge an zugesetzter Stärke, desto geringer ist die Festigkeit der hergestellten Holzfasermatte für Bearbeitung und Transport. Eine nur mit Stärke gebundene Matte führt zu keinem handhabbaren Produkt.

In einer besonders bevorzugten Ausführungsform werden Polymilchsäurefasern mit einer Länge 38 mm +/- 3 mm und einer Feinheit von 1,7 dtex verwendet.

Wie oben bereits erwähnt, weist die vorliegende Holzfasermatte einen erhöhten pH-Wert im Vergleich zu Holzfasermatten mit nicht-biologisch abbaubaren Bindemitteln bzw. Bindefasern auf. So kann die vorliegende Holzfasermatte einen pH-Wert von größer 4,0, bevorzugt größer 4,4 aufweisen. Der pH-Wert Bereich der vorliegenden Holzfasermatte liegt zwischen 4,0 und 8,0, bevorzugt zwischen 4,4 und 7,0, insbesondere bevorzugt zwischen 4,8 und 6,0.

Der pH-Wert der vorliegenden Holzfasermatte ist um mindestens einen Wert von 1,0 höher als in einer mit nicht-biologisch abbaubaren Bindemitteln / Bindefasern (z.B. Polyethylenfasern, Biko-Fasern) hergestellten Holzfasermatte. Die pH-Wert Bestimmung der Holzfasermatte erfolgt durch Einbringen einer Mischung aus Holzfasern, Stärke und Polymilchsäurefasern in Wasser und anschließender Bestimmung des pH-Wertes der wässrigen Lösung.

Wie ebenfalls bereits oben erwähnt, weist die erfindungsgemäße Holzfasermatte einen reduzierten Geruch, insbesondere nach Essigsäure auf.

In einer Ausführungsform der vorliegenden Holzfasermatte ist das mindestens eine Absorptionsmittel gleichmäßig (homogen) oder ungleichmäßig (inhomogen) in der Holzfasermatte verteilt.

Im Falle einer homogenen Verteilung des Absorptionsmittels in der Holzfasermatte ist das mindestens eine Absorptionsmittel bevorzugt gleichmäßig über die gesamte Dicke bzw. Breite der Holzfasermatte verteilt. Entsprechend weist das Absorptionsmittel in diesem Falle eine gleichmäßige Konzentration in der Matte auf.

Bevorzugterweise beträgt die Menge des Absorptionsmittels in der finalen Holzfasermatte bei einer gleichmäßigen Verteilung zwischen 1-10 Gew%, bevorzugt 1,5-5 Gew%, insbesondere bevorzugt 1,5 Gew% bezogen auf das Gesamtgewicht an Holzfasern.

Im Falle einer ersten Variante einer ungleichmäßigen Verteilung des Absorptionsmittels in der Holzfasermatte kann das mindestens eine Absorptionsmittel in mindestens einer vorbestimmten Lage der Holzfasermatte verteilt bzw. angeordnet sein. Entsprechend erfolgt die Verteilung des Absorptionsmittels innerhalb einer Schicht der Holzfasermatte, aus welcher das Absorptionsmittel in die angrenzenden Bereiche innerhalb der Holzfasermatte diffundieren kann.

In dieser Variante der Verteilung des Absorptionsmittels in einer Lage bzw. Schicht in der Holzfasermatte kann die Menge des Absorptionsmittels zwischen 10 und 100 g/m², bevorzugt 30 bis 80 g/m², insbesondere bevorzugt 50 bis 60 g/m² liegen. Der Vorteil der Anordnung des Absorptionsmittels in einer Lage innerhalb der Holzfasermatte ist insbesondere der, dass die Menge an Absorptionsmittel in Abhängigkeit von Pflanzengröße und Wasserbedarf bei der Herstellung der Holzfasermatte gesteuert werden kann, und zwar in einfacher Weise über die gestreute Menge des Absorptionsmittels.

In einer weiteren, zweiten Variante der ungleichmäßigen Verteilung des Absorptionsmittels in der Holzfasermatte kann das mindestens eine Absorptionsmittel lokal begrenzt in der Holzfasermatte vorgesehen sein. Eine lokal begrenzte Anordnung des Absorptionsmittels in der Holzfasermatte erfolgt zum Beispiel in einer in die Holzfasermatte eingebrachten Vertiefung (zum Beispiel Loch, Auskerbung etc.).

In einer besonders bevorzugten Ausführungsform der vorliegenden Holzfasermatte wird als das mindestens eine Absorptionsmittel ein Polymer auf Acrylbasis, insbesondere ein Copolymer aus Acrylsäure und Acrylat verwendet. Derartige Acrylhaltige Absorptionsmittel mit Partikelgrößen zwischen 100-1000 µm sind auch als Superabsorber bekannt, die in der Lage sind, ein Vielfaches ihres Eigengewichtes an polaren Flüssigkeiten wie zum Beispiel Wasser aufzunehmen. Bei Aufnahme der Flüssigkeit quillt der Superabsorber auf und bildet ein Hydrogel.

Im vorliegenden Falle besteht das Absorptionsmittel in einer besonders bevorzugten Ausführungsform aus einem Copolymer aus Kaliumpolyacrylat und Polyamid.

Generell ist auch der Einsatz weiterer Absorptionsmittel wie Tonmineralien, insbesondere von Schichtsilikaten, Kieselgel oder Aluminiumoxid einsetzbar.

Zur generellen Verbesserung der Benetzbarkeit der Holzfasermatte können auch Tenside z. B. in der Blowline den Fasern zugegeben werden. Auch ein Aufsprühen von Tensiden vor dem Ofen ist möglich.

Es ist weiterhin bevorzugt, wenn die vorliegende Holzfasermatte mindestens ein antimikrobielles Mittel umfasst. Das vorliegend zum Einsatz kommende antimikrobielle Mittel ist besonders wirksam gegen Bakterien, Hefen, Pilze oder Algen. So können als Fungizide Hinokitol oder auch Polyamine verwendet werden.

Das zum Einsatz kommende antimikrobielle Mittel dringt bevorzugt in die Zellwand der Mikroorganismen ein und fungiert als selektiver allosterischer Inhibitor von verschiedenen Enzymen, insbesondere von Enzymen der Zellwandbiosynthese oder der ribosomalen Proteinbiosynthese.

Eine weitere Alternative besteht in der Verwendung von antimikrobiell wirksamen Peptiden (AMP) oder auch Lysozym.

Das antimikrobielle Mittel kann in einer Menge zwischen 0,5-5 Gew%, bevorzugt 1-4 Gew%, insbesondere bevorzugt 2 Gew% bezogen auf die Menge an Holzfasern in der Holzfasermatte eingesetzt werden.

Bevorzugt wird das antimikrobielle Mittel auf die Oberseite des Faserkuchens aus Holzfasern und Bindemittel vor dem Verdichten und Kalibrieren aufgebracht. Es ist aber auch möglich und denkbar, das mindestens eine antimikrobielle Mittel direkt mit dem Gemisch aus Holzfasern, biologisch abbaubaren Bindemittel und Absorptionsmittel vor dem Auftrag auf das Transportband, d.h. vor der Ausbildung als Vorvlies in Kontakt zu bringen, z.B. durch Zugabe in der Blow-Iine.

In einer weiteren bevorzugten Ausführungsform sind in der vorliegenden Holzfasermatte Pflanzennährstoffe enthalten, die eine ausreichende Versorgung der Pflanzen mit Stickstoff, Phosphaten, Schwefel und anderen Spurenelementen gewährleisten. Eine zusätzliche Versorgung der Holzfasermatte mit Pflanzennährstoffen ist notwendig, da Holzfasern an sich einen niedrigen Nährstoffgehalt aufweisen. Allerdings bieten die Holzfasermatten den Vorteil, dass eine gezielte Einstellung des Nährstoffgehaltes durch Kalkung und Düngung möglich ist.

Die Zugabe der Pflanzennährstoffe erfolgt bevorzugt während oder im Anschluss an die Herstellung der Holzfasermatte.

Die Zugabe der Pflanzennährstoffe zu den Holzfasern kann in der Blow-Line erfolgen oder auf das Vorvlies aufgesprüht werden. Eine weitere Möglichkeit ist, dass die Nährstoffe mit dem Wasser der Pflanzmatte zugesetzt werden.

Im Falle von Stickstoff als Nährstoff, könnte dieser als Harnstoff in der Blowline appliziert werden. Damit wäre zusätzlich auch eine bessere Benetzbarkeit der Pflanzmatte in der Nutzung gegeben.

Die in der vorliegenden Holzfasermatte verwendeten Holzfasern sind trockene Holzfasern mit einer Länge von 1,0 mm bis 20 mm, bevorzugt 1,5 mm bis 10 mm und einer Dicke von 0,05 mm bis 1 mm. Die Holzfaserfeuchte der verwendeten Fasern liegt dabei in einem Bereich zwischen 5 und 15 %, bevorzugt 6 und 12 %, insbesondere bevorzugt bei 10% bezogen auf das Gesamtgewicht der Holzfasern

Die vorliegende Holzfasermatte weist eine Dicke zwischen 20 und 200 mm, bevorzugt 50 und 150 mm, insbesondere bevorzugt 80 und 100 mm auf.

Die Rohdichte der vorliegenden Holzfasermatte beträgt 50-250 kg/m³, bevorzugt 70-170 kg/m³, insbesondere bevorzugt 100-140 kgm³.

Wie oben ausgeführt, kann die vorliegende Holzfasermatte als Pflanzensubstrat bzw. Substratkomponente in der Landwirtschaft oder im Gartenbau zum Einsatz kommen. Insbesondere eine Verwendung der Holzfasermatte zur Dachbegrünung oder auch zur Pflanzenaufzucht ist vorstellbar.

Die vorliegende Holzfasermatte kann in einem Verfahren gemäß Anspruch 10 mit den folgenden Schritten hergestellt werden:
a) Herstellen von Holzfasern aus lignozellulosehaltigem Ausgangsmaterial,
b) In-Kontaktbringen der Holzfasern mit mindestens einem Teil einer Lösung von mindestens einer Stärke,
c) Trocknen der mit der mindestens einen Stärke vermischten Holzfasern,
d) In-Kontaktbringen der mit der mindestens einen Stärke vermischten Holzfasern mit Polymilchsäurefasern;
e) Aufbringen der Mischung aus Holzfasern, Stärke und Polymilchsäurefasern auf ein Transportband unter Ausbildung eines Faserkuchens, und
f) Erwärmen und Verdichten des Faserkuchens zu einer Holzfasermatte.
Zur Herstellung der Holzfasern gemäß Schritt a) werden die Holzhackschnitzel zunächst gereinigt, anschließend zerfasert und getrocknet.

Das In-Kontaktbringen der Holzfasern mit mindestens einem Teil einer Stärkelösung in Schritt b) erfolgt bevorzugt in einem Blow-Line-Verfahren, bei dem die Stärkelösung in den Holzfaserstrom eingespritzt wird, wodurch eine homogene Verteilung der Stärke auf den Holzfasern bewirkt wird. Hierbei ist es möglich, dass die Stärkelösung zur Holzfaservernetzung in der Blow-Line einem Holzfaser-Dampfgemisch zugeführt wird.

Es ist aber auch denkbar, die Stärkelösung mittels Trockenbeleimung mit den Holzfasern in Kontakt zu bringen. Die Stärkelösung wird hier durch extrem feines Verdüsen auf die getrockneten Holzfasern aufgebracht. Eine derartige Trockenbeleimung reduziert den Verbrauch an Stärkelösung gegenüber einer Blow-Line-Beleimung drastisch.

Gemäß dem oben beschriebenen Verfahren werden die mit der Stärkelösung versehenen Holzfasern anschließend getrocknet (siehe Schritt c). Die Trocknung kann in einem Rohtrockner (z.B. bekannt aus der Holzwerkstoffindustrie) getrocknet.

In einer Variante des oben beschriebenen Herstellungsverfahrens werden die mit der mindestens einen Stärke vermischten Holzfasern zusammen mit den Polymilchsäurefasern über einer Blasleitung geführt und auf ein Transportband aufgeblasen. In der Blasleitung erfolgt dabei eine intensive Vermischung der Komponenten (Schritt d) durch die eingeblasene Luft als Transportmittel. Die Menge an zugeführtem Fasergemisch richtet sich nach der gewünschten Schichtdicke und der gewünschten Rohdichte der herzustellenden Holzfasermatte.

Falls eine Verfestigung der Oberfläche der Holzfasermatte gewünscht ist, kann dies durch Besprühen der Faserkuchenoberflächen mit Stärkelösung vor dem Verfestigen erreicht werden.

Der Schritt des Verdichtens erfolgt bei Temperaturen zwischen 120°C und 220°C, bevorzugt 150°C und 200°C, insbesondere 170 °C und 180°C, wobei der Faserkuchen auf eine Dicke zwischen 20 und 200 mm, bevorzugt 50 und 150mm, insbesondere bevorzugt 80 und 100 mm verdichtet wird. Dies kann in einem Umluft-Ofen erfolgen, in dem die Matte von heißer Luft durchströmt wird. Aus dem Vlies bildet sich die Matte in dem Ofen bei der Durchströmung mit heißer Luft, wobei Klebepunkte zwischen den Holzfasern und den biologisch abbaubaren Polymilchsäurefasern durch deren Erwärmung ausgebildet werden. Die weitere Komponente ist zwar auch ein Klebstoff, jedoch bilden die Polymilchsäurefasern eine stützende Matrix für die Matte - insbesondere, je dicker die Matte wird.

Alternativ könnte anstatt des Ofens und des Durchströmens mit heißer Luft eine Heißpresse verwendet werden, bei der die Wärme hauptsächlich durch Kontakt mit den heißen Pressblechen in das Vlies zur Mattenbildung eingebracht wird. Oft wird das Vlies deswegen vor der Heißpresse vorgewärmt.

In der Endbearbeitung wird die Fasermatte schließlich auf die gewünschten Maße reduziert und gekühlt; die Kühlung erfolgt bevorzugt während der Kalibrierung und in der Kühlzone des Durchlaufofens.

In einer Verfahrensvariante wird mindestens ein (weiterer) Teil der Lösung der mindestens einen Stärke zusammen mit den Polymilchsäurefasern in Schritt d) mit den Holzfasern kontaktiert (vermischt). Dies kann durch Besprühen des Fasergemisches in der Mischstation erfolgen.

In einer weiteren Verfahrensvariante wird in einem Schritt e1) die Mischung aus Holzfasern, Stärke und Polymilchsäurefasern auf ein erstes Transportband unter Ausbildung eines Vorvlieses aufgebracht und in einem Schritt e2) das Vorvlies zerfasert und vermischt und die Fasermischung auf ein zweites Transportband unter Ausbildung eines Faserkuchens aufgebracht.

In einer weiteren Ausführungsform wird das mindestens eine Absorptionsmittel auf das Vorvlies und/oder den Faserkuchen aufgebracht. Dies kann z.B. unter Verwendung eines Pulverstreuers erfolgen.

Wird das Absorptionsmittel auf das Vorvlies gestreut, erfolgt am Ende des ersten Transportbandes die Zerfaserung des mit dem Absorptionsmittel versetzten Vorvlies, welches nach nochmaliger Vermischung auf ein zweites Transportband aufgeblasen wird.

Es ist auch denkbar, das Absorptionsmittel auf das Vorvlies zu streuen, auf welches anschließend eine weitere Menge (oder Lage) einer Mischung aus Holzfasern und der Bindemittelkombination aufgebracht wird.

Gemäß dieser Verfahrensvariante wird demnach zunächst eine erste Lage eine Fasergemisches aus Holzfasern und Bindemittelkombination (z.B. in einer Menge zwischen 1000 und 2000 g/m², bevorzugt 1500 g/m²) auf das Transportband aufgeblasen oder aufgestreut, anschließend das Absorptionsmittel als zweite Lage auf dieses Fasergemisch oder auch Vorvlies aufgebracht und anschließend eine weitere, dritte Lage eines Fasergemisches aus Holzfasern und Bindemittelkombination (z.B. in einer Menge zwischen 2000 und 3000 g/m², bevorzugt 2500 g/m²) auf das Vorvlies aufgebracht. Entsprechend ist das Absorptionsmittel in diesem Fall als zweidimensionale Lage oder Schicht innerhalb der Holzfasermatte eingetragen, wodurch eine inhomogene Verteilung des Absorptionsmittels in der Holzfasermatte bewirkt wird. Aufgrund dieser spezifischen schichtförmigen Anordnung des Absorptionsmittels ist die Konzentration desselbigen innerhalb der Holzfasermatte lokal erhöht.

In einer noch weiteren Ausführungsform wird das mindestens eine antimikrobiellen Mittel auf das Vorvlies (z.B. vor der Zerfaserung am Ende des ersten Transportbandes) und / oder den Faserkuchen aufgebracht (z.B. aufgesprüht). Der Faserkuchen wird bevorzugt auf der Oberseite mit dem mindestens einem antimikrobiellen Mittel versehen und anschließend in einen Ofen überführt, in welchem die abschließende Kalibrierung und/oder Verdichtung erfolgt.

In einer noch weiteren der vorliegenden Holzfasermatte wird das Absorptionsmittel lokal begrenzt. Hierfür wird in die fertige Holzfasermatte mindestens eine Vertiefung eingebracht, in welche das mindestens eine Absorptionsmittel eingebracht wird. Dies kann zusammen mit einem Pflanzensamen oder einer Jungpflanze erfolgen.

In dieser Variante wird demnach das Absorptionsmittel erst nach dem Verpressen bzw. Verdichten in die Matte an einer vorbestimmten Lokalisation eingebracht. Der Vorteil dieser Variante besteht darin, dass die Holzfasermatte während der Lagerung und somit vor der eigentlichen Benutzung als Substratkomponente keine unnötige Feuchtigkeit aufnimmt und somit eventuelle Schimmel- oder Verrottungsprozesse der Holzfasermatte aufgrund eines erhöhten Feuchtigkeitsgehaltes vermieden werden.

Pro Vertiefung bzw. Loch kann die Menge an eingebrachten Absorptionsmittel zwischen 1 und 50 g, bevorzugt zwischen 1 und 20 g, insbesondere bevorzugt zwischen 1 und 10 g betragen. Auch hier ist die Menge von der Pflanzengröße, der Größe der Vertiefung und dem Wasserbedarf abhängig.

Die Erfindung wird nachfolgend unter Bezugnahme an mehreren Ausführungsbeispielen näher erläutert.

### Ausführungsbeispiel 1:

In einem Refiner werden aus Hackschnitzeln Holzfasern hergestellt, welche anschließend in der Blowline mit einem Stärkebindemittel (Ecosynthetix) versetzt werden. Die zugesetzte Menge lag dabei bei 5 % Gew% fest auf Holz atro. Es können verschiedene Holzarten eingesetzt werden, vorzugsweise Nadelholz. Der Leim hatte einen Feststoffgehalt von ca. 50%. Dieses Gemisch wurde dann auf eine Feuchte von ca. 10% getrocknet werden.

Diese Holzfasern mit Stärkebindemittel werden anschließend in einem Fasermischer mit Polymilchsäurefasern, (PLA-Faser genannt) vermischt (Anteil Polymilchsäurefasern: ca. 5 Gew% auf Holzfasern atro). Die PLA-Fasern haben eine Länge von 38 mm +/-3 mm und eine Feinheit von 1,7 dtex.

Aus dem Gemisch wird durch Aufblasen auf ein Transportband eine endlose Matte erzeugt. Danach erfolgte eine nochmalige Vermischung und ein Ablegen auf ein weiteres Transportband. Es werden ca. 5600 g Gemisch/m² gestreut.

Der Faserkuchen wird dann in einem Umluft-Ofen auf Temperaturen von 120 -180°C erwärmt und auf die gewünschte Dicke kalibriert und somit verdichtet. Während der Kalibrierung wird der Faserkuchen mit Kühlluft auf ca. 30 - 40 °C abgekühlt. Die Produktionsgeschwindigkeit des Transportbandes lag bei 5 m/min. Am Ende des Umluft-Ofens ist die Matte auf 80 mm verdichtet.

Als Referenz wurde eine Holzfasermatte mit Bindefasern auf Basis von PET (Polyethylenterephtalat) in gleicher Stärke und Dichte (ca. 70 kg/m³) hergestellt. Der Anteil der Bindefaser lag dabei bei ca. 7 Gew%. Aus der Endlosfaser-Matte werden Zuschnitte oder Rollenware erzeugt.

### Ausführungsbeispiel 2 (nicht erfindungsgemäß):

In einem Refiner werden aus Hackschnitzeln Holzfasern hergestellt, welche anschließend in der Blowline mit einem Stärkebindemittel (Ecosynthetix) versetzt werden. Die zugesetzte Menge lag dabei bei 10% Gew% fest auf Holz atro. Der Leim hatte ein Feststoffgehalt von ca. 50 %. Dies Gemisch wurde dann auf eine Feuchte von ca. 10% getrocknet werden.

Diese Holzfasern mit Stärkebindemittel werden anschließend in einem Fasermischer mit Polymilchsäurefasern vermischt (Anteil Polymilchsäurefasern: ca. 3 Gew% auf Holzfasern atro). Die PLA-Fasern haben eine Länge von 22 mm +/-3 mm und eine Feinheit von 1,7 dtex. Aus dem Gemisch wird durch Aufblasen auf ein Transportband eine Matte erzeugt. Danach erfolgt eine nochmalige Vermischung und ein Ablegen auf ein Transportband. Es werden ca. 5600 g Gemisch/m² gestreut.

Der Faserkuchen wird dann in einem Umluft-Ofen auf Temperaturen von 120-180°C erwärmt und verdichtet. Die Geschwindigkeit des Transportbandes lag bei 5 m/min. Am Ende des Ofens ist die Matte auf 80 mm verdichtet. Aus der Endlosfaser-Matte werden Zuschnitte oder Rollenware erzeugt.

An den Proben wurde neben dem pH-Wert auch der Geruch analysiert. Dies erfolgte durch eine Gruppe von Personen, die mit der olfaktometrischen Beurteilung von Produkten Erfahrung haben.

| | Nullprobe | Probe 1 | Probe 2 |
|---|---|---|---|
| pH-Wert* | 3,4 | 4,4 | 4,8 |
| Geruch Dämmstoff nach Produktion | deutlich sauer, essigähnlich | unspezifisch | Unspezifisch |

| | | | |
|---|---|---|---|
| *Eine Menge von 1 g Fasern wurden in 50 ml destilliertes Wasser eingebracht, nach ca. 10 min wurde der pH-Wert bestimmt. | | | |

Wie aus der Tabelle zu entnehmen ist besitzen, die mit Stärke und Polymilchsäurefasern hergestellten Dämmstoffe einen signifikant höheren pH-Wert, der dem Pflanzenwachstum zuträglich ist.

### Ausführungsbeispiel 3:

In einem Refiner werden aus Hackschnitzeln Holzfasern hergestellt, welche anschließend in der Blowline mit einem Stärkebindemittel (Ecosynthetix) versetzt werden. Die zugesetzte Menge lag dabei bei 5 % Gew% fest auf Holz atro. Es können verschiedene Holzarten eingesetzt werden, vorzugsweise Nadelholz. Der Leim hatte ein Feststoffgehalt von ca. 50%. Dieses Gemisch wurde dann auf eine Feuchte von ca. 10% getrocknet werden.

Diese Holzfasern mit Stärkebindemittel werden anschließend in einem Fasermischer mit Polymilchsäurefasern, (PLA-Faser genannt) vermischt (Anteil Polymilchsäurefasern: ca. 5 Gew% auf Holzfasern atro). Die PLA-Fasern haben eine Länge von 38 mm +/-3 mm und eine Feinheit von 1,7 dtex.

Aus dem Gemisch wird durch Aufblasen auf ein Transportband eine endlose Matte erzeugt. Danach erfolgen eine nochmalige Vermischung und ein Ablegen auf ein weiteres Transportband. Es werden ca. 5600 g Gemisch/m² gestreut.

Der Faserkuchen wird dann in einem Umluft-Ofen auf Temperaturen von 120 -180°C erwärmt und auf die gewünschte Dicke kalibriert und somit verdichtet. Während der Kalibrierung wird der Faserkuchen mit Kühlluft auf ca. 30 - 40 °C abgekühlt. Die Produktionsgeschwindigkeit des Transportbandes lag bei 5 m/min. Am Ende des Umluft-Ofens ist die Matte auf 80 mm verdichtet.

Als Referenz wurde eine Holzfasermatte mit Bindefasern auf Basis von Polymilchsäurefasern in gleicher Stärke und Dichte (ca. 70 kg/m³) hergestellt. Der Anteil der Bindefaser lag dabei bei ca. 7 Gew%. Aus der Endlosfaser-Matte werden Zuschnitte oder Rollenware erzeugt.

Aus der Matte wurde ein Muster entnommen und in einem Exsikkator über Wasser gelagert. Zum Vergleich wurde die Referenzprobe, die nur mit Polymilchsäure hergestellt worden war, mitgeprüft. Dabei stellte sich heraus, dass die Referenzprobe bzw. Nullprobe nach ca. zwei Monaten einen deutlich sichtbaren Schimmelbewuchs zeigte, wohingegen die Versuchsmatte diesen Bewuchs nicht zeigte. Zusätzlich war bei der Nullprobe ein deutlich erdiger Geruch beim Öffnen des Exsikkators wahrnehmbar. Dieser war beim Öffnen des Exsikkators mit der Versuchsmatte allenfalls zu erahnen.

## Patentansprüche

1. Holzfasermatte zur Verwendung als Pflanzensubstrat umfassend Holzfasern, und mindestens ein Mittel zur Absorption einer polaren Flüssigkeit,
**gekennzeichnet durch**
ein biologisch abbaubares Bindemittel aus Polymilchsäurefasern in einer Menge zwischen 5 und 10 Gew% und mindestens einer Stärke in einer Menge zwischen 5 und 10 Gew% jeweils bezogen auf die Menge an Holzfasern atro.

2. Holzfasermatte nach Anspruch 1, **dadurch gekennzeichnet, dass** die mindestens eine Stärke ausgewählt aus der Gruppe enthaltend Kartoffelstärke, Maisstärke, Weizenstärke, Reisstärke.

3. Holzfasermatte nach Anspruch 1 oder 2, **dadurch gekennzeichnet, dass** die mindestens eine Stärke in nativer oder modifizierter Form vorliegt.

4. Holzfasermatte nach einem der vorhergehenden Ansprüche, **dadurch gekennzeichnet, dass** die mindestens eine Stärke eine derivatisierte Stärke ausgewählt ist aus einer Gruppe enthaltend kationische oder anionische Stärke, carboxylierte Stärke, carboxy-methylierte Stärke, sulfatierte Stärke, phosphorylierte Stärke, veretherte Stärke, oxidierte Stärke enthaltend Carboxyl- oder Dialdehydgruppen und hydrophobe Stärken.

5. Holzfasermatte nach einem der vorhergehenden Ansprüche, **dadurch gekennzeichnet, dass** die Polymilchsäurefasern in einer Menge zwischen 8 bis 10 Gew% bezogen auf die Menge an Holzfasern atro enthalten sind.

6. Holzfasermatte nach einem der vorhergehenden Ansprüche, **gekennzeichnet, durch** einen pH-Wert von größer 4,0, bevorzugt größer 4,4.

7. Holzfasermatte nach einem der vorhergehenden Ansprüche, **dadurch gekennzeichnet, dass** das mindestens eine Absorptionsmittel ein Polymer auf Acrylbasis, insbesondere ein Copolymer aus Acrylsäure und Acrylat ist.

8. Holzfasermatte nach einem der vorhergehenden Ansprüche, **gekennzeichnet durch** mindestens ein antimikrobielles Mittel, bevorzugt in einer Menge zwischen 0,5-5 Gew% bezogen auf die Menge an Holzfasern.

9. Verwendung einer Holzfasermatte nach einem der vorhergehenden Ansprüche als Pflanzensubstrat.

10. Verfahren zur Herstellung einer Holzfasermatte nach einem der Ansprüche 1-8 umfassend die Schritte:
a) Herstellen von Holzfasern aus lignozellulosehaltigem Ausgangsmaterial,
b) In-Kontaktbringen der Holzfasern mit mindestens einem Teil einer Lösung von mindestens einer Stärke,
c) Trocknen der mit der mindestens einen Stärke vermischten Holzfasern,
d) In-Kontaktbringen der mit der mindestens einen Stärke vermischten Holzfasern mit Polymilchsäurefasern;
e) Aufbringen der Mischung aus Holzfasern, Stärke und Polymilchsäurefasern auf ein Transportband unter Ausbildung eines Faserkuchens, und
f) Erwärmen und Verdichten des Faserkuchens zu einer Holzfasermatte.

11. Verfahren nach Anspruch 10, **dadurch gekennzeichnet, dass** mindestens ein weiterer Teil der Lösung von mindestens einer Stärke zusammen mit den Polymilchsäurefasern in Schritt d) mit den Holzfasern kontaktiert oder vermischt wird.

12. Verfahren nach einem der Ansprüche 10 oder 11, **dadurch gekennzeichnet, dass** in einem Schritt e1) die Mischung aus Holzfasern, Stärke und Polymilchsäurefasern auf ein erstes Transportband unter Ausbildung eines Vorvlieses aufgebracht wird und in einem Schritt e2) das Vorvlies zerfasert und vermischt wird und die Fasermischung auf ein zweites Transportband unter Ausbildung eines Faserkuchens aufgebracht wird.

13. Verfahren nach einem der Ansprüche 10 bis 12, **dadurch gekennzeichnet, dass** das mindestens eine Absorptionsmittel auf das Vorvlies und/oder den Faserkuchen aufgebracht, z.B. aufgestreut, wird.

14. Verfahren nach einem der Ansprüche 10 bis 13, **dadurch gekennzeichnet, dass** das mindestens eine antimikrobiellen Mittel auf das Vorvlies und / oder den Faserkuchen aufgebracht, z.B. aufgesprüht, wird.

## Claims

1. Wood fiber mat for use as a plant substrate comprising wood fibers, and at least one agent for absorbing a polar liquid,
**characterized by**
a biodegradable binder of polylactic acid fibres in an amount between 5 and 10% by weight and at least one starch in an amount between 5 and 10% by weight, based in each case on the amount of wood fibres atro.

2. Wood fiber mat according to claim 1, **characterized in that** said at least one starch is selected from the group consisting of potato starch, corn starch, wheat starch, rice starch.

3. Wood fiber mat according to claim 1 or 2, **characterized in that** the at least one starch is present in native or modified form.

4. Wood fiber mat according to one of the preceding claims, **characterized in that** said at least one starch is a derivatized starch selected from a group comprising cationic or anionic starch, carboxylated starch, carboxymethylated starch, sulfated starch, phosphorylated starch, etherified starch, oxidized starch comprising carboxyl or dialdehyde groups and hydrophobic starches.

5. Wood fiber mat according to one of the preceding claims, **characterized in that** the polylactic acid fibers are contained atro in an amount between 8 and 10% by weight based on the amount of wood fibers.

6. Wood fiber mat according to one of the preceding claims, **characterized by** a pH value of greater than 4.0, preferably greater than 4.4.

7. Wood fiber mat according to one of the preceding claims, **characterized in that** the at least one absorbent is an acrylic-based polymer, in particular a copolymer of acrylic acid and acrylate.

8. Wood fibre mat according to one of the preceding claims, **characterized by** at least one antimicrobial agent, preferably in an amount between 0.5-5 % by weight relative to the amount of wood fibers.

9. Use of a wood fiber mat according to one of the preceding claims as a plant substrate.

10. A process for producing a wood fiber mat according to any one of Claims 1-8 comprising the steps:
a) Preparing wood fibers from lignocellulosic starting material,
(b) contacting the wood fibers with at least part of a solution of at least one starch,
(c) drying the wood fibers mixed with at least one starch,
(d) contacting the wood fibers mixed with at least one starch with polylactic acid fibers;
(e) applying the mixture of wood fibers, starch and polylactic acid fibers to a conveyor belt to form a fiber cake; and
(f) heating and compacting the fiber cake into a wood fiber mat.

11. Process according to claim 10, **characterized in that** at least a further part of the solution of at least one starch is contacted or mixed with the wood fibers together with the polylactic acid fibers in step d).

12. Process according to one of claims 10 or 11, **characterized in that** in a step e1) the mixture of wood fibers, starch and polylactic acid fibers is applied to a first conveyor belt with formation of a fiber fleece, and in a step e2) the fiber fleece is defibrated and mixed and the fiber mixture is applied to a second conveyor belt with formation of a fiber cake.

13. Process according to one of claims 10 to 12, **characterized in that** the at least one absorbent is applied, e.g. scattered, to the fiber fleece and/or the fiber cake.

14. Process according to one of claims 10 to 13, **characterized in that** the at least one antimicrobial agent is applied, e.g. sprayed, to the fiber fleece and/or the fiber cake.

## Revendications

1. Tapis de fibres de bois destiné à être utilisé en tant que substrat végétal comprenant des fibres de bois, et au moins un moyen d'absorption d'un liquide polaire,
**caractérisé par**
un liant biodégradable en fibres d'acide polylactique en une quantité entre 5 et 10 % en poids et au moins un amidon en une quantité entre 5 et 10 % en poids respectivement par rapport à la quantité de fibres de bois à l'état de siccité absolue.

2. Tapis de fibres de bois selon la revendication 1, **caractérisé en ce que** l'au moins un amidon est sélectionné dans le groupe contenant de l'amidon de pomme de terre, de l'amidon de maïs, de l'amidon de blé, de l'amidon de riz.

3. Tapis de fibres de bois selon la revendication 1 ou 2, **caractérisé en ce que** l'au moins un amidon est présent sous forme native ou modifiée.

4. Tapis de fibres de bois selon l'une quelconque des revendications précédentes, **caractérisé en ce que** l'au moins un amidon est un amidon dérivé sélectionné dans un groupe contenant de l'amidon cationique ou anionique, de l'amidon carboxylé, de l'amidon carboxyméthylé, de l'amidon sulfaté, de l'amidon phosphorylé, de l'amidon éthérifié, de l'amidon oxydé contenant des groupes carboxyle ou dialdéhyde et des amidons hydrophobes.

5. Tapis de fibres de bois selon l'une quelconque des revendications précédentes, **caractérisé en ce que** les fibres d'acide polylactique sont contenues en une quantité entre 8 et 10 % en poids par rapport à la quantité de fibres de bois à l'état de siccité absolue.

6. Tapis de fibres de bois selon l'une quelconque des revendications précédentes, **caractérisé par** un pH supérieur à 4,0, de préférence supérieur à 4,4.

7. Tapis de fibres de bois selon l'une quelconque des revendications précédentes, **caractérisé en ce que** l'au moins un moyen d'absorption est un polymère à base acrylique, en particulier un copolymère en acide acrylique et acrylate.

8. Tapis de fibres de bois selon l'une quelconque des revendications précédentes, **caractérisé par** au moins un moyen antimicrobien, de préférence en une quantité entre 0,5 et 5 % en poids par rapport à la quantité de fibres de bois.

9. Utilisation d'un tapis de fibres de bois selon l'une quelconque des revendications précédentes en tant que substrat végétal.

10. Procédé de fabrication d'un tapis de fibres de bois selon l'une quelconque des revendications 1 à 8 comprenant les étapes de :
a) fabrication de fibres de bois à partir d'un matériau de départ contenant de la lignocellulose,
b) mise en contact des fibres de bois avec au moins une partie d'une solution d'au moins un amidon,
c) séchage des fibres de bois mélangées avec l'au moins un amidon,
d) mise en contact des fibres de bois mélangées avec l'au moins un amidon avec des fibres d'acide polylactique ;
e) application du mélange fibres de bois, amidon et fibres d'acide polylactique sur une bande transporteuse en formant un gâteau de fibres, et
f) chauffage et compactage du gâteau de fibres en un tapis de fibres de bois.

11. Procédé selon la revendication 10, **caractérisé en ce qu'**au moins une autre partie de la solution d'au moins un amidon conjointement avec les fibres d'acide polylactique est mise en contact ou mélangée dans l'étape d) avec les fibres de bois.

12. Procédé selon l'une quelconque des revendications 10 ou 11, **caractérisé en ce que** dans une étape e1) le mélange fibres de bois, amidon et fibres d'acide polylactique est appliqué sur une première bande transporteuse en formant un prétissé et dans une étape e2) le prétissé est défibré et mélangé et le mélange de fibres est appliqué sur une deuxième bande transporteuse en formant un gâteau de fibres.

13. Procédé selon l'une quelconque des revendications 10 à 12, **caractérisé en ce que** l'au moins un moyen d'absorption est appliqué, par exemple dispersé, sur le prétissé et/ou le gâteau de fibres.

14. Procédé selon l'une quelconque des revendications 10 à 13, **caractérisé en ce que** l'au moins un moyen antimicrobien est appliqué, par exemple pulvérisé, sur le prétissé et/ou le gâteau de fibres.
